Europäisches Patentamt

European Patent Office

Office européen des brevets

(19)

(11) Publication number: **0 185 231**

**A1**

(12)

# EUROPEAN PATENT APPLICATION

(21) Application number: **85115082.1**

(22) Date of filing: **28.11.85**

(51) Int. Cl.⁴: **A 01 N 41/10**
**//(A01N41/10, 33:22)**

(30) Priority: **04.12.84 JP 256364/84**

(43) Date of publication of application:
**25.06.86 Bulletin 86/26**

(84) Designated Contracting States:
**DE FR GB IT NL**

(71) Applicant: **MITSUBISHI CHEMICAL INDUSTRIES LIMITED**
**5-2, Marunouchi 2-chome Chiyoda-ku**
**Tokyo 100(JP)**

(72) Inventor: **Watanabe, Hisao**
**6-20, Satsukigaoka Midori-ku**
**Yokohama-shi Kanagawa-ken(JP)**

(72) Inventor: **Munakata, Toshio**
**574-7, Kanamori**
**Machida-shi Tokyo(JP)**

(74) Representative: **Wächtershäuser, Günter, Dr.**
**Tal 29**
**D-8000 München 2(DE)**

(54) Herbicidal composition.

(57) A herbicidal composition comprising (A) 4-methylsulfonyl-2,6-dinitro-N,N-dipropylaniline and (B) 2-chloro-3-phenoxy-6-nitroaniline, as active ingredients.

EP 0 185 231 A1

- 1 -

## HERBICIDAL COMPOSITION

The present invention relates to a herbicidal composition.  More particularly, it relates to a highly safe herbicidal composition comprising a mixture of two types of active ingredients, which is capable of completely controlling or inhibiting a wide range of weeds in an upland field and which has less phytotoxicity against crops.

Various herbicides for upland fields have been proposed, and some of them are practically in use.  For instance, 4-methylsulfonyl-2,6-dinitro-N,N-dipropyl-aniline is a compound disclosed as a herbicidally effective ingredient in Japanese Examined Patent Publication 10391/1967 (corresponds to BE 672,199).  This compound exhibits herbicidal activities against large crabgrass, goose-grass, dent foxtail, annual bluegrass, barnyardgrass, annual nutsedge or the like, but its herbicidal effects against weeds such as catch weed, pale smartweed, shepherd's purse, chickweed, livid amaranth or lamb's quarters, are inadequate.  Besides, when used alone in an effective amount, it brings about

- 2 -

**0185231**

phytotoxicity against upland rice plant, maize, wheat, barley, soybean, Adzuki bean and the like.

On the other hand, Japanese Unexamined Patent Publication No. 19260/1980 (corresponds to EP 7482) discloses 2-chloro-6-nitro-3-phenoxyaniline as a herbicidally effective ingredient. This compound exhibits superior effects against chickweed, lamb's quarters, livid amaranth, dead-nettle or the like, but its effects against catch weed, large crabgrass, barnyardgrass, dent foxtail, annual bluegrass or the like, are inadequate. Besides, when used alone in an effective amount, it brings about phytotoxicity against crop plants such as barley, soybean, kidney bean, Adzuki bean and upland rice plant.

Upland weeds include many kinds of weeds ranging from monocotyledonous weeds to dicotyledonous weeds and they tend to break out in great quantities. A local variation in the nature of soil or weather brings about a variation in the herbicidal activity or phytotoxicity particularly in the case of pre-emergence type herbicide, whereby a wide range application is hindered.

Further, differing from paddy field crop plants, upland crop plants include many types of plants ranging from monocotyledonous crop plants to dicotyledonous plants. Accordingly, the selectivity must be ensured with respect to many types of crop plants.

- 3 - 0185231

It is an object of the present invention to solve such problems and to provide a herbicide which is capable of controlling or inhibiting many weeds by a single application and yet which is highly safe to many kinds of crop plants. The present inventors have found it possible to obtain such a herbicide by combining two specific types of active ingredients, and have accomplished the present invention on the basis of this discovery.

The present invention provides a herbicidal composition comprising (A) 4-methylsulfonyl-2,6-dinitro-N,N-dipropylaniline and (B) 2-chloro-3-phenoxy-6-nitroaniline, as active ingredients.

Now, the present invention will be described in detail with reference to the preferred embodiments.

Both of the active ingredients of the composition of the present invention i.e. 4-methylsulfonyl-2,6-dinitro-N,N-dipropylaniline (hereinafter referred to simply as component A) and 2-chloro-3-phenoxy-6-nitroaniline (hereinafter referred to simply as component B) are compounds already known as herbicides. As mentioned above, however, when used alone, each of components A and B shows a narrow herbicidal spectrum and strong phytotoxicity, and the crop plants to which they are applicable are rather limited. Whereas, when components A and B are used in combination in accordance with the present invention, the herbicidal spectrum can be widened, the herbicidal effects can be increased and the dose required can be reduced, and the range of crop plants to which the herbicide is applicable can be enlarged, by virtue of synergistic effects of the two components, to such a degree which can not be obtained when each component is used alone. For instance, it is thereby possible to control or inhibit catch weed which used to be difficult to control or inhibit by the single use of each component. Further, the herbicidal composition of the present invention can be used as a herbicide during the cultivation of crop plants such as soybean, kidney bean, Adzuki bean, upland rice plant, barley and wheat. Yet, the herbicidal composition has a feature that its herbicidal activities last for a long period of time in spite of a reduced dose. The synergistic effects obtainable by the combination of the present invention are distinctly superior to any effects obtainable by a combination of component A or B with other compounds having similar structures.

The weight ratio of components A and B in the herbicidal composition of the present invention is usually from 4 : 1 to 1 : 4, preferably from 2 : 1 to 1 : 2.

In the present invention, components A and B are used usually in the form of an emulsifiable concentrate, a powder, granules, tablets or a wettable powder, by mixing them with an inert liquid carrier or solid carrier and adding a suitable surfactant or the like, in accordance with a conventional method for formulation of agricultural chemicals.

As the liquid carrier, there may be mentioned toluene, xylene, methylnaphthalene, cyclohexane, butanol, glycol, dimethylsulfoxide, dimethylformamide, acetone, methyl isobutyl ketone, an animal or vegetable oil, a fatty acid, a fatty acid ester or water.  Likewise, as the solid carrier, there may be mentioned clay, kaolin clay, talc, bentonite, diatomaceous earth, silica, calcium carbonate or a vegetable powder such as a soybean powder or a wheat powder.  Further, if necessary, other active components such as agricultural fungicides, insecticides, nematocides or other herbicides, plant growth controlling agents, soil improvers or fertilizers, may also be incorporated.  Moreover, to ensure the herbicidal effects, a proper adjuvant such as an extender, an emulsifier, a wetting agent or a fixing agent may optionally be incorporated.  The concentration of active ingredients in the composition varies depending upon the particular formulation, but it is usually selected within a range of from 1 to 99%.  Alternatively, components A and B may be separately formulated into emulsifiable concentrates, powders, granules, tablets or wettable powders, which may be used simultaneously or may be mixed immediately prior to the application.

The amount of application (i.e. the dose) of the herbicidal composition of the present invention varies depending upon the weeds to be killed, the crop plants to be cultivated or the nature of the soil.  However, components A and B as active ingredients are usually applied in a total amount of from 1 to 50 g/100 $m^2$, preferably from 2.5 to 25 g/100 $m^2$.

Now, the present invention will be described in further detail with reference to Formulation Examples and Test Examples. However, it should be understood that the present invention is by no means restricted by these specific Examples.

Formulation Example 1 (Wettable powder)

The following components were uniformly mixed and pulverized to obtain a wettable powder.

|  | Parts by weight |
|---|---|
| Component A | 30 |
| Component B | 20 |
| Carplex #80 [1] | 43 |
| Nonipole [2] | 2 |
| Gosenol GL 05S [3] | 2 |
| DKS WK [4] | 3 |

Notes:

[1]: Tradename for a carrier manufactured by Shionogi & Co., Ltd.

[2]: Tradename for a surfactant manufactured by Sanyo Chemical Industry, Ltd.

[3]: Tradename for a surfactant manufactured by Nihon Gosei Kagaku Co., Ltd.

[4]: Tradename for a surfactant manufactured by Daiichi Kogyo Yakuhin K.K.

Formulation Example 2 (Wettable powder)

The following components were uniformly mixed and pulverized to obtain a wettable powder.

|  | Parts by weight |
| --- | --- |
| Component A | 20 |
| Component B | 30 |
| Carplex #80 | 43 |
| Neogene P35 [5] | 3 |
| Gosenol GL 05S | 2 |
| Sunekis P 201 [6] | 2 |

Notes:

[5]: Tradename for a surfactant manufactured by Daiichi Kogyo Yakuhin K.K.

[6]: Tradename for a surfactant manufactured by Sanyo Kokusaku Pulp Co., Ltd.

Formulation Example 3 (Wettable powder)

The following components were uniformly mixed and pulverized to obtain a wettable powder.

|  | Parts by weight |
| --- | --- |
| Component A | 30 |
| Component B | 30 |
| Carplex #80 | 33 |
| Nonipole | 3 |
| Gosenol GL 05S | 2 |
| DKS WK | 2 |

Formulation Example 4 (Emulsifiable concentrate)

The following components were uniformly mixed and dissolved to obtain an emulsifiable concentrate.

|  | Parts by weight |
|---|---|
| Component A | 15 |
| Component B | 10 |
| Cyclohexanone | 37 |
| Isophorone | 10 |
| Xylenol | 10 |
| Sorpol 3015 [*7] | 9 |
| Sorpol 3005X [*8] | 4 |
| AN-3 [*9] | 5 |

Notes:

[*7], [*8]: Tradename for a surfactant manufactured by Toho Chemical Co., Ltd.

[*9]: Tradename for an antifreezer, manufactured by Takasago Perfume Co., Ltd.

Test Example 1

The seeds of the crop plants and weeds in Table 1, were sown to an experimental agricultural field, and immediately thereafter, the herbicides were applied for soil treatment. Namely, a wettable powder prepared in the similar manner as in Formulation Example 1 was diluted with water in an amount of 10 liters/are, and sprayed to the soil surface by means of a small size spray. The doses of the active ingredients are shown in Table 1.

On the 50th day after the treatment, the phytotoxicity against each crop plant and the herbicidal activity against each weed were examined.

The herbicidal effects and phytotoxicity were evaluated under the following standards.

Herbicidal effect or phytotoxicity

Index number 0: No herbicidal effect or phytotoxicity

1: 24% or less of herbicidal effect or phytotoxicity

2: 25 - 34% of herbicidal effect or phytotoxicity

3: 35 - 44% of herbicidal effect or phytotoxicity

4: 45 - 54% of herbicidal effect or phytotoxicity

5: 55 - 64% of herbicidal effect or phytotoxicity

6: 65 - 74% of herbicidal effect or phytotoxicity

7: 75 - 84% of herbicidal effect or phytotoxicity

8: 85 - 94% of herbicidal effect or phytotoxicity

9: 95 - 99% of herbicidal effect or phytotoxicity

10: 100% of herbicidal effect or phytotoxicity

The botanical names of weeds are as follows.

| | |
|---|---|
| pale smartweed; | Polygonum lapathifolium |
| lamb's quarters; | Chenopodium album |
| livid amaranth; | Amaranthus lividus |
| common purselane; | Portulaca aleracea |
| catch·weed; | Galium aparine |
| chickweed; | Stellaria media |
| barnyardgrass; | Echinochloa crus-galli |
| large crabgrass; | Digitaria sanguinalis |
| dent foxtail; | Alopecurus aequalis |
| annual bluegrass; | Poa annua |
| goosegrass; | Eleusine indica |
| green foxtail; | Setaria virdis |

The test results are shown in Table 1.

Table 1

| Doses of active ingredients (g/a) | | Herbicidal activity | | | | | | | | | | | |
|---|---|---|---|---|---|---|---|---|---|---|---|---|---|
| A | B | Pale smartweed | Lamb's quarters | Livid amaranth | Common purslane | Yellow cress | Shepherd's purse | Catch weed | Chick-weed | Barn-yard grass | Large crab-grass | Dent foxtail | Annual blue-grass |
| 3 | 0 | 1 | 3 | 2 | 3 | 3 | 3 | 0 | 0 | 7 | 8 | 9 | 8 |
| 5 | 0 | 2 | 4 | 3 | 3 | 4 | 4 | 0 | 1 | 8 | 9 | 9 | 8 |
| 7 | 0 | 4 | 5 | 5 | 5 | 5 | 5 | 1 | 2 | 9 | 10 | 10 | 9 |
| 9 | 0 | 4 | 6 | 5 | 6 | 5 | 6 | 1 | 3 | 10 | 10 | 10 | 10 |
| 0 | 2 | 5 | 6 | 7 | 5 | 9 | 9 | 0 | 9 | 0 | 0 | 0 | 0 |
| 0 | 4 | 6 | 8 | 7 | 6 | 9 | 9 | 0 | 10 | 0 | 0 | 1 | 1 |
| 0 | 6 | 7 | 9 | 9 | 7 | 10 | 10 | 1 | 10 | 2 | 2 | 3 | 1 |
| 0 | 8 | 9 | 10 | 10 | 9 | 10 | 10 | 1 | 10 | 4 | 4 | 5 | 3 |
| 0 | 10 | 10 | 10 | 10 | 9 | 10 | 10 | 4 | 10 | 5 | 6 | 7 | 6 |
| 3 | 2 | 9 | 10 | 10 | 9 | 10 | 10 | 6 | 10 | 8 | 10 | 10 | 10 |
| 4.5 | 3 | 10 | 10 | 10 | 10 | 10 | 10 | 10 | 10 | 10 | 10 | 10 | 10 |
| 6 | 4 | 10 | 10 | 10 | 10 | 10 | 10 | 10 | 10 | 10 | 10 | 10 | 10 |
| 7.5 | 5 | 10 | 10 | 10 | 10 | 10 | 10 | 10 | 10 | 10 | 10 | 10 | 10 |
| 9 | 6 | 10 | 10 | 10 | 10 | 10 | 10 | 10 | 10 | 10 | 10 | 10 | 10 |
| 10.5 | 7 | 10 | 10 | 10 | 10 | 10 | 10 | 10 | 10 | 10 | 10 | 10 | 10 |
| 2 | 3 | 10 | 10 | 10 | 10 | 10 | 10 | 5 | 9 | 8 | 10 | 9 | 10 |
| 3 | 4.5 | 10 | 10 | 10 | 10 | 10 | 10 | 9 | 10 | 10 | 10 | 10 | 10 |
| 4 | 6 | 10 | 10 | 10 | 10 | 10 | 10 | 10 | 10 | 10 | 10 | 10 | 10 |
| 5 | 7.5 | 10 | 10 | 10 | 10 | 10 | 10 | 10 | 10 | 10 | 10 | 10 | 10 |
| 6 | 9 | 10 | 10 | 10 | 10 | 10 | 10 | 10 | 10 | 10 | 10 | 10 | 10 |
| 7 | 10.5 | 10 | 10 | 10 | 10 | 10 | 10 | 10 | 10 | 10 | 10 | 10 | 10 |
| 3 | 3 | 8 | 9 | 10 | 8 | 9 | 10 | 4 | 10 | 8 | 9 | 9 | 9 |
| 5 | 5 | 10 | 10 | 10 | 10 | 10 | 10 | 10 | 10 | 10 | 10 | 10 | 10 |
| 7 | 7 | 10 | 10 | 10 | 10 | 10 | 10 | 10 | 10 | 10 | 10 | 10 | 10 |

Table 1     (cont'd)

| Doses of active ingredients (g/a) | | Phytotoxicity | | | | | | | | |
|---|---|---|---|---|---|---|---|---|---|---|
| A | B | Soybean | Kidney bean | Adzuki bean | Garden pea | Maize | Upland rice plant | Wheat | Barley | Carrot |
| 3 | 0 | 0 | 0 | 0 | 0 | 0 | 0 | 0 | 0 | 0 |
| 5 | 0 | 0 | 0 | 0 | 0 | 1 | 0 | 0 | 0 | 0 |
| 7 | 0 | 0 | 1 | 3 | 0 | 2 | 2 | 1 | 1 | 0 |
| 9 | 0 | 2 | 2 | 4 | 0 | 5 | 5 | 4 | 3 | 0 |
| 0 | 2 | 0 | 0 | 0 | 0 | 0 | 0 | 0 | 0 | 0 |
| 0 | 4 | 0 | 0 | 0 | 0 | 0 | 0 | 0 | 0 | 0 |
| 0 | 6 | 0 | 1 | 1 | 0 | 0 | 0 | 0 | 0 | 0 |
| 0 | 8 | 2 | 2 | 4 | 0 | 0 | 1 | 0 | 0 | 0 |
| 0 | 10 | 4 | 5 | 6 | 0 | 1 | 2 | 0 | 2 | 0 |
| 3 | 2 | 0 | 0 | 0 | 0 | 0 | 0 | 0 | 0 | 0 |
| 4.5 | 3 | 0 | 0 | 0 | 0 | 0 | 0 | 0 | 0 | 0 |
| 6 | 4 | 0 | 0 | 0 | 0 | 1 | 1 | 0 | 0 | 0 |
| 7.5 | 5 | 0 | 1 | 3 | 0 | 2 | 2 | 1 | 1 | 0 |
| 9 | 6 | 3 | 3 | 5 | 0 | 5 | 5 | 4 | 3 | 0 |
| 10.5 | 7 | 3 | 3 | 5 | 0 | 5 | 5 | 4 | 3 | 0 |
| 2 | 3 | 0 | 0 | 0 | 0 | 0 | 0 | 0 | 0 | 0 |
| 3 | 4.5 | 0 | 0 | 0 | 0 | 0 | 0 | 0 | 0 | 0 |
| 4 | 6 | 0 | 1 | 1 | 0 | 1 | 0 | 0 | 0 | 0 |
| 5 | 7.5 | 2 | 2 | 4 | 0 | 1 | 1 | 1 | 1 | 0 |
| 6 | 9 | 3 | 4 | 5 | 0 | 2 | 3 | 1 | 1 | 0 |
| 7 | 10.5 | 4 | 5 | 6 | 0 | 3 | 3 | 1 | 1 | 0 |
| 3 | 3 | 0 | 0 | 0 | 0 | 0 | 0 | 0 | 0 | 0 |
| 5 | 5 | 0 | 0 | 1 | 0 | 1 | 0 | 0 | 0 | 0 |
| 7 | 7 | 2 | 2 | 4 | 0 | 2 | 2 | 1 | 1 | 0 |

Test Example 2

The seeds of the crop plants and weeds in Table 2 were sown to an experimental agricultural field, and immediately thereafter the herbicides were applied for soil treatment.

Namely, an emulsifiable concentrate prepared in the similar manner as in Formulation Example 4, was diluted with water in an amount of 10 liters/are, and sprayed to the soil surface by means of a small size spray. The doses of the active ingredients are as shown in Table 2.

On the 50th day after the treatment, the phytotoxicity against each crop plant and the herbicidal activity against each weed were examined.

The herbicidal effects and phytotoxicity were evaluated in the same manner as in Test Example 1. The results are shown in Table 2.

Table 2

| Doses of active ingredients (g/a) | | Herbicidal activity | | | | | | | | | Phytotoxicity | | | | | |
|---|---|---|---|---|---|---|---|---|---|---|---|---|---|---|---|---|
| A | B | Large crab-grass | Goose grass | Barn-yard-grass | Pale smartweed | Lamb's quarters | Livid amaranth | Common purslane | Dent foxtail | Chick-weed | Maize | Soy-bean | Adzuki bean | Kidney bean | Wheat | Barley |
| 3.5 | 0 | 8 | 7 | 9 | 2 | 4 | 4 | 5 | 9 | 1 | 0 | 0 | 0 | 0 | 0 | 0 |
| 4.5 | 0 | 9 | 8 | 10 | 3 | 5 | 5 | 5 | 9 | 2 | 1 | 0 | 1 | 0 | 0 | 0 |
| 6 | 0 | 10 | 9 | 10 | 4 | 5 | 5 | 6 | 10 | 2 | 2 | 0 | 3 | 1 | 1 | 1 |
| 0 | 2 | 0 | 0 | 0 | 6 | 7 | 8 | 6 | 1 | 9 | 0 | 0 | 0 | 0 | 0 | 0 |
| 0 | 3 | 1 | 0 | 1 | 6 | 8 | 9 | 7 | 3 | 10 | 0 | 0 | 0 | 0 | 0 | 0 |
| 0 | 4 | 2 | 1 | 1 | 7 | 9 | 10 | 9 | 4 | 10 | 0 | 0 | 0 | 0 | 0 | 0 |
| 0 | 5 | 3 | 3 | 2 | 8 | 10 | 10 | 10 | 6 | 10 | 0 | 1 | 2 | 1 | 0 | 0 |
| 3 | 2 | 10 | 10 | 10 | 10 | 10 | 10 | 10 | 10 | 10 | 0 | 0 | 0 | 0 | 0 | 0 |
| 4.5 | 3 | 10 | 10 | 10 | 10 | 10 | 10 | 10 | 10 | 10 | 0 | 0 | 0 | 0 | 0 | 0 |
| 6 | 4 | 10 | 10 | 10 | 10 | 10 | 10 | 10 | 10 | 10 | 2 | 0 | 1 | 0 | 0 | 0 |

Test Example 3

The seeds of the crop plants and weeds identified in Table 3 were sown in porous pots, and immediately thereafter, the respective herbicides were applied for preemergence soil treatment.

In addition to components A and B of the present invention, commercially available typical upland soil treating agents i.e. simazine, linuron, alachlor, dinitramine and trifluralin, were used as herbicides, and the effectiveness of their combinations with component B was compared.

On the 60th day after the treatment, the phytotoxicity against each crop plant and the herbicidal activity against each weed were examined. The results are shown in Table 3. The herbicidal activity and phytotoxicity were evaluated in the same manner as in Test Example 1.

It is evident from Table 3 that component A is far superior to other agents as the partner of the combination with component B. At a safely employable dose i.e. at a dose where no phytotoxicity will be brought about, the herbicide composed of a mixture of A and B according to the present invention exhibits excellent synergistic effects and it is particularly noteworthy that it is capable of controlling or inhibiting catch weed. However, the combinations of component B with other herbicidal agents show no substantial synergistic effects, and does not provide satisfactory herbicidal activities. Particularly, dinitramine and trifluralin provide no substantial synergistic effects when combined with component B in spite of the fact that they have the same dinitroaniline structure as component A used in the present invention, and do not bring about the widening of the herbicidal spectrum or the reduction of the phytotoxicity by the combinations.

Table 3

| Active ingredient | Dose (g/a) | Herbicidal activity | | | | | | | | Phytotoxicity | | | | | Wheat |
|---|---|---|---|---|---|---|---|---|---|---|---|---|---|---|---|
| | | Pale smartweed | Livid amaranth | Catch weed | Chick-weed | Barn-yard-grass | Large crab-grass | Green foxtail | Dent foxtail | Soy-bean | Kidney bean | Adzuki bean | Maize | Upland rice plant | |
| A | 3 | 2 | 3 | 0 | 0 | 4 | 9 | 4 | 9 | 0 | 0 | 0 | 0 | 0 | 0 |
| | 5 | 3 | 4 | 1 | 1 | 7 | 9 | 7 | 9 | 0 | 0 | 1 | 0 | 0 | 0 |
| | 7.5 | 5 | 5 | 3 | 2 | 9 | 10 | 9 | 10 | 0 | 1 | 2 | 1 | 2 | 1 |
| B | 2 | 3 | 5 | 0 | 7 | 0 | 0 | 0 | 0 | 0 | 0 | 0 | 0 | 0 | 0 |
| | 4 | 4 | 6 | 0 | 10 | 0 | 0 | 0 | 1 | 0 | 0 | 0 | 0 | 0 | 0 |
| | 6 | 5 | 7 | 0 | 10 | 1 | 1 | 1 | 2 | 0 | 0 | 1 | 0 | 0 | 0 |
| A + B | 3+2 | 9 | 10 | 7 | 10 | 10 | 10 | 9 | 10 | 0 | 0 | 0 | 0 | 0 | 0 |
| | 4.5+3 | 10 | 10 | 10 | 10 | 10 | 10 | 9 | 10 | 0 | 0 | 0 | 0 | 0 | 0 |
| | 6+4 | 10 | 10 | 10 | 10 | 10 | 10 | 10 | 10 | 0 | 0 | 1 | 0 | 0 | 0 |
| | 7.5+5 | 10 | 10 | 10 | 10 | 10 | 10 | 10 | 10 | 0 | 1 | 2 | 2 | 1 | 1 |
| *1 Simazine | 5 | 5 | 7 | 0 | 7 | 1 | 3 | 0 | 6 | 0 | 0 | 0 | 0 | 0 | 0 |
| | 7.5 | 6 | 8 | 0 | 8 | 2 | 7 | 2 | 7 | 2 | 3 | 4 | 0 | 0 | 0 |
| | 10 | 7 | 10 | 0 | 10 | 4 | 9 | 4 | 10 | 3 | 3 | 6 | 0 | 1 | 2 |
| Simazine + B | 5+2 | 5 | 7 | 0 | 7 | 1 | 3 | 0 | 6 | 0 | 1 | 1 | 0 | 0 | 0 |
| | 7.5+4 | 7 | 9 | 0 | 10 | 2 | 7 | 2 | 8 | 2 | 3 | 5 | 0 | 0 | 1 |
| Linulon *2 | 5 | 5 | 7 | 0 | 8 | 0 | 4 | 3 | 6 | 0 | 0 | 2 | 0 | 0 | 0 |
| | 10 | 6 | 9 | 0 | 10 | 4 | 8 | 6 | 8 | 1 | 2 | 4 | 0 | 0 | 2 |
| Linulon + B | 5+2 | 5 | 7 | 0 | 8 | 1 | 5 | 4 | 6 | 0 | 0 | 2 | 0 | 0 | 0 |
| | 10+4 | 7 | 10 | 1 | 10 | 6 | 9 | 7 | 9 | 2 | 2 | 5 | 0 | 0 | 2 |

Table 3 (cont'd)

| Active ingredient | Dose (g/a) | Herbicidal activity | | | | | | | | Phytotoxicity | | | | | |
|---|---|---|---|---|---|---|---|---|---|---|---|---|---|---|---|
| | | Pale smartweed | Livid amaranth | Catch weed | Annual bluegrass | Barn-yard-grass | Large crab-grass | Green foxtail | Dent foxtail | Soy-bean | Kidney bean | Adzuki bean | Maize | Upland rice plant | Wheat |
| Alachlor *3 | 5 | 5 | 7 | 0 | 2 | 8 | 9 | 7 | 6 | 0 | 0 | 2 | 0 | 3 | 4 |
| | 10 | 7 | 9 | 0 | 4 | 9 | 10 | 9 | 8 | 0 | 1 | 3 | 0 | 4 | 5 |
| Alachlor + B | 5+2 | 5 | 7 | 0 | 7 | 8 | 9 | 7 | 6 | 0 | 0 | 2 | 0 | 3 | 4 |
| | 10+4 | 8 | 10 | 0 | 10 | 10 | 10 | 9 | 8 | 0 | 1 | 4 | 1 | 4 | 6 |
| Dinitramine *4 | 1 | 0 | 0 | 0 | 5 | 7 | 8 | 2 | 7 | 0 | 0 | 1 | 2 | 1 | 0 |
| | 2 | 0 | 0 | 0 | 7 | 8 | 8 | 3 | 8 | 1 | 1 | 2 | 2 | 2 | 1 |
| | 4 | 4 | 4 | 1 | 9 | 9 | 9 | 5 | 10 | 1 | 2 | 3 | 3 | 3 | 2 |
| Dinitramine +B | 1+2 | 3 | 8 | 0 | 8 | 7 | 9 | 4 | 9 | 0 | 0 | 1 | 1 | 1 | 1 |
| | 2+4 | 3 | 9 | 0 | 10 | 9 | 10 | 5 | 10 | 1 | 2 | 2 | 2 | 2 | 3 |
| | 4+6 | 5 | 10 | 3 | 10 | 10 | 10 | 5 | 10 | 2 | 3 | 3 | 4 | 6 | 3 |
| Trifluralin *5 | 4 | 0 | 2 | 0 | 2 | 4 | 7 | 2 | 7 | 0 | 0 | 1 | 1 | 1 | 0 |
| | 6 | 0 | 7 | 0 | 4 | 8 | 8 | 4 | 9 | 0 | 1 | 2 | 4 | 2 | 0 |
| | 10 | 0 | 9 | 0 | 6 | 10 | 10 | 6 | 10 | 1 | 2 | 3 | 5 | 5 | 1 |
| Trifluralin +B | 4+2 | 5 | 5 | 0 | 7 | 4 | 8 | 2 | 9 | 0 | 0 | 1 | 1 | 1 | 0 |
| | 6+4 | 6 | 7 | 0 | 10 | 8 | 8 | 4 | 10 | 1 | 2 | 3 | 4 | 3 | 1 |
| | 10+6 | 7 | 10 | 0 | 10 | 10 | 10 | 6 | 10 | 2 | 3 | 5 | 6 | 6 | 3 |

Note: *1: 2-chloro-4,6-bis(ethylamino)-1,3,5-triazine

*2: 3-(3,4-dichlorophenyl)-1-methoxy-1-methylurea

*3: 2-chloro-2',6'-diethyl-N-methoxymethylacetamide

*4: $N^1,N^1$-diethyl-2,6-dinitro-4-trifluoromethyl-m-phenylenediamine

*5: α,α,α-trifluoro-2,6-dinitro-N,N-dipropyl-p-toluidine

CLAIMS:

1. A herbicidal composition comprising (A) 4-methylsulfonyl-2,6-dinitro-N,N-dipropylaniline and (B) 2-chloro-3-phenoxy-6-nitroaniline, as active ingredients.

2. The herbicidal composition according to Claim 1, which comprises components (A) and (B) in a weight ratio of from 4 : 1 to 1 : 4.

3. The herbicidal composition according to Claim 1, which comprises components (A) and (B) in a weight ratio of from 2 : 1 to 1 : 2.

4. The herbicidal composition according to Claim 1, which further contains a suitable adjuvant to form an emulsifiable concentrate, a powder, tablets, granules or a wettable powder.

5. Use of the herbicidal composition of Claim 1 for selectively controlling or inhibiting weed growth during the cultivation of soybean, Adzuki bean, maize, upland rice plant, wheat or barley.

6. A herbicidal method for controlling or inhibiting the growth of undesired weeds, which comprises applying 4-methylsulfonyl-2,6-dinitro-N,N-dipropylaniline and 2-chloro-3-phenoxy-6-nitroaniline to the soil in a total amount of from 1 to 50 g/100 m$^2$.

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| A,D | EP-A-0 007 482 (CELAMERCK GmbH & CO., KG) * Claims 2-5; page 6, lines 29-35 * | 1-6 | A 01 N  41/10 // (A 01 N  41/10 A 01 N  33:22 ) |
| A | C.R. WORTHING: "The pesticide manual, a world compendium", 6th edition, 1979, The British Crop Protection Council, Croydon, GB. * Page 383 * | 1-6 | |

TECHNICAL FIELDS
SEARCHED (Int Cl 4)

A 01 N

The present search report has been drawn up for all claims

| Place of search | Date of completion of the search | Examiner |
|---|---|---|
| THE HAGUE | 17-03-1986 | DECORTE D. |